(19) Europäisches Patentamt
European Patent Office
Office européen des brevets

(11) **EP 3 723 274 A1**

(12) **EUROPÄISCHE PATENTANMELDUNG**

(43) Veröffentlichungstag:
**14.10.2020 Patentblatt 2020/42**

(51) Int Cl.:
*H02P 23/14* (2006.01)     *H02P 23/00* (2016.01)
*H02P 1/16* (2006.01)      *H02P 6/182* (2016.01)
*H02P 27/16* (2006.01)     *H02P 21/14* (2016.01)
*H02P 21/20* (2016.01)

(21) Anmeldenummer: **19167794.7**

(22) Anmeldetag: **08.04.2019**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(71) Anmelder: **Siemens Aktiengesellschaft**
**80333 München (DE)**

(72) Erfinder:
• **Nannen, Hauke**
  **90443 Nürnberg (DE)**
• **Zatocil, Heiko**
  **90469 Nürnberg (DE)**

(54) **VERFAHREN ZUR DREHZAHLREGELUNG EINER PERMANENTERREGTEN DREHSTROMMASCHINE MIT EINEM THYRISTOREN UMFASSENDEN SANFTSTARTER UND DREHSTROMMASCHINE**

(57)     Die Erfindung betrifft ein Verfahren zur Drehzahlregelung einer permanenterregten Drehstrommaschine (M) mit einem Thyristoren umfassenden Sanftstarter (SS), insbesondere mittels einer Reglerkaskade. Das Verfahren umfasst die Bestimmung einer drehzahlabhängigen Lastkennlinie einer mit der Drehstrommaschine (M) gekoppelten Last (LD), wobei die Lastkennlinie für eine Drehzahl (n) in einem vorgegebenen Drehzahlbereich ein von der Last (LD) im Betrieb benötigtes Moment ($M_L$) beschreibt. Anschließend erfolgt die Bestimmung eines Solldrehmoments aus der Lastkennlinie in Abhängigkeit einer IstDrehzahl der Drehstrommaschine (M). Nach der Verarbeitung des Solldrehmoments zur Bestimmung eines Zündzeitpunkts der Thyristoren erfolgt das Zünden der Thyristoren zu dem zugeordneten Zündzeitpunkt.

FIG 4

EP 3 723 274 A1

**Beschreibung**

Eine Drehstrommaschine wandelt mechanische Energie in Drehstrom oder Drehstrom in mechanische Energie um. Sie kann grundsätzlich als elektrischer Generator oder als Elektromotor betrieben werden. Als Sanftanlauf werden Maßnahmen zur Leistungsbegrenzung beim Einschalten eines elektrischen Gerätes, beispielsweise eines elektrischen Motors, bezeichnet.

Drehstrommaschinen werden gemäß der IEC-Norm 60034 anhand ihres Wirkungsgrades in verschiedene Energieeffizienzklassen eingeteilt. Gerade im unteren Leistungsbereich bis ca. 20kW lassen sich die gesetzlichen Wirkungsgrade für Elektroantriebe nur schwer einhalten, weshalb vermehrt die Verwendung von Permanentmagneten im Rotor angestrebt wird, z.B. als Permanenterregte Synchronmaschine (PMSM).

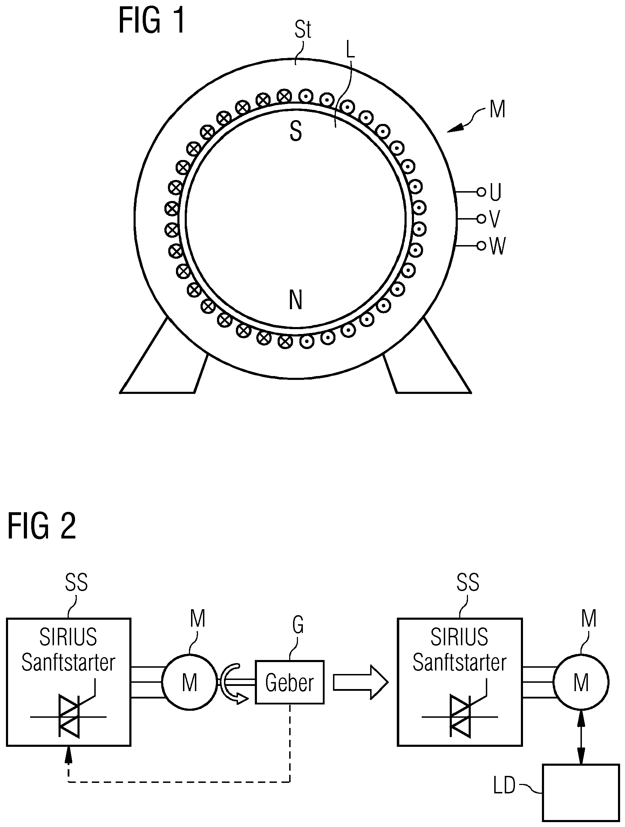

Figur 1 zeigt eine schematische Darstellung einer solchen permanenterregten Synchronmaschine M, in der Ausführung als Innenpolmaschine mit einem Stator St und einem Läufer L. Der Läufer umfasst einen magnetischen Nordpol N und Südpol S. Der Stator St umfasst Wicklungsstränge U, V, W. Die Darstellung ist lediglich beispielhaft zu verstehen und hat keine einschränkende Wirkung auf den Schutzbereich des beanspruchten Gegenstands.

Dieser Maschinentyp ermöglicht zwar hohe Energieeffizienzgrade, jedoch sind der Start sowie der Betrieb am starren Netz nicht ohne weiteres möglich.

Um dies zu ermöglichen, kann ein Dämpferkäfig im Läufer der Maschine vorgesehen werden, welcher zwar einen sicheren Hochlauf am starren Netz ermöglicht, jedoch das speisende Netz durch sehr hohe Anlaufströme stark belastet.

Ebenso ist der Betrieb an einem geeigneten leistungselektronischen Stellglied, wie zum Beispiel einem Frequenzumrichter oder Sanftstarter möglich. Hier stellt insbesondere der Einsatz eines Sanftstarter, auch Sanftanlaufgerät genannt, eine kostenfreundliche Lösung zum Hochlauf einer permanenterregten Synchronmaschine am starren Netz dar. Ein solcher Thyristoren umfassender Sanftstarter reduziert beim Einschalten (z. B. mittels Phasenanschnitt) die Spannung und erhöht diese langsam bis zur vollen Netzspannung. Ein derartiger Sanftanlauf ist allerdings häufig nur im lastlosen Zustand oder bei geringer Last möglich. Derzeit ist hierfür jedoch noch keine marktreife Lösung bekannt.

In der Dissertation von Dr. Marcel Benecke (Universität Magdeburg) mit dem Titel "Anlauf von energieeffizienten Synchronmaschinen mit Drehstromsteller" wird eine Lösung zum Hochlauf der permanenterregten Synchronmaschine an einem Sanftstarter vorgestellt. Das in dieser Arbeit vorgestellte Verfahren benötigt den aktuellen Polradwinkel der Maschine, sodass die für die Arbeit verwendeten Motoren mit einem entsprechenden Gebersystem ausgestattet werden mussten. Unter einem Geber versteht man Drehzahl- und Lagegeber. Diese erfassen die mechanischen Größen Drehzahl und Lage. Ihre Signale sind erforderlich, um die Regler mit Istwerten zu versorgen und die vorhandenen Lage- und Drehzahlregelkreise zu schließen. Für die vektoriellen Regelverfahren bei Drehstromantrieben dienen die Lage- und Drehzahlsignale als Eingangsgröße für den Stromregelkreis. Der Geber erfasst in diesem Fall die Drehzahl und/oder Lage unmittelbar an der Motorwelle.

Das Gebersystem wirkt sich negativ auf die Kosten und die Verfügbarkeit des Systems aus, was derzeit eine Sanftstarterlösung für hocheffiziente Motoren unattraktiv macht. Aus diesen Gründen ist ein Verfahren zum Hochlauf ohne Geber anzustreben.

Beim Betrieb einer permanenterregten Synchronmaschine mit einem Sanftstarter wäre zur Realisierung verschiedenster Anwendungen eine präzise Drehzahlregelung wünschenswert. Ein geberloses Startverfahren wurde z.B. von der Anmelderin in der WO 2018/086688 A1 beschrieben. Dieses basiert auf der Prädiktion, d.h. Vorausberechnung, der Phasenströme und des Drehmoments über einen längeren Zeitraum, um geeignete Zündzeitpunkte für die Thyristoren des Sanftstarters berechnen zu können. Je präziser die Zündzeitpunkte für die Thyristoren berechnet werden, desto gleichmäßiger und kraftvoller ist ein Start der Maschine möglich.

Es ist Aufgabe der Erfindung, ein Verfahren zum Betrieb einer permanenterregten Synchronmaschine ohne Geber anzugeben, das für einen Thyristorsteller verwendbar ist und eine präzisere Berechnung der Zündzeitpunkte für die Thyristoren ermöglicht. Es ist weiterhin Aufgabe der Erfindung, eine permanenterregte Synchronmaschine ohne Geber anzugeben, welche mit dem erfindungsgemäßen Verfahren arbeitet.

Diese Aufgaben werden gelöst durch ein Verfahren gemäß den Merkmalen des Anspruchs 1 sowie eine Steuereinrichtung und eine Drehstrommaschine gemäß den Merkmalen der Ansprüche 13 bzw. 14. Vorteilhafte Ausgestaltungen ergeben sich aus den abhängigen Ansprüchen.

Die vorliegende Anmeldung beschreibt ein Verfahren zur Drehzahlregelung einer permanenterregten Drehstrommaschine mit einem Thyristoren umfassenden Sanftstarter. Die Drehzahlregelung erfolgt insbesondere mittels einer Reglerkaskade. Bei dem vorgeschlagenen Verfahren wird eine drehzahlabhängige Lastkennlinie einer mit der Drehstrommaschine gekoppelten Last bestimmt. Die Lastkennlinie beschreibt für eine Drehzahl in einem vorgegebenen Drehzahlbereich ein von der Last im Betrieb benötigtes Moment. Die Lastkennlinie, die vor deren rechnergestützten Bestimmung weder bekannt noch modelliert ist, ist abhängig von der Art der mit der Drehstrommaschine verbundenen Last, die direkt oder über mechanische Übertrager, wie z.B. ein Getriebe, mit der Drehstrommaschine verbunden ist. Die Last kann z.B. eine Pumpe oder ein Lüfter sein. Aus der Lastkennlinie wird ein Solldrehmoment in Abhängigkeit einer Ist-Drehzahl der Drehstrommaschine bestimmt. Anschließend wird das Solldrehmoment zur Bestimmung eines Zündzeitpunkts der Thyristoren verarbeitet. Dann erfolgt ein Zünden der Thyristoren zu dem zugeordneten Zündzeitpunkt.

Das Verfahren beruht auf der Erkenntnis, dass die Bestimmung der Zündzeitpunkte der Thyristoren beim Hochlauf (d.h. Start) der Drehstrommaschine präzisiert werden kann, wenn eine genaue Kenntnis über die Last vorliegt. Aus diesem Grund ist vorgesehen, die Lastkennlinie in Abhängigkeit der Drehzahl der Last bzw. der Drehstrommaschine durch eine Kombination aus mess- und rechentechnischen Schnitten zu bestimmen. Die Lastkennlinie ist bekanntermaßen abhängig von einem Lastmoment und der Trägheit des Systems, bestehend aus Drehstrommaschine und Last. Diese Informationen können in einer (statischen) Vorsteuerung genutzt werden, so dass ein Regler, der, basierend auf Drehzahlen als Eingangsgrößen, nur noch eine Fehlerkorrektur zur Bestimmung des Solldrehmoments übernehmen muss.

Erfolgt durch die Berücksichtigung der Last die Zündung der Thyristoren des Sanftstarters präziser, wirkt sich dies in einer besseren Drehmomentausbeute aus. Zusätzlich können Drehmomentüberschüsse durch die bessere Lastkenntnis reduziert werden. Dies führt zu einer größeren Laufruhe während des Hochlaufs der Drehstrommaschine. Außerdem ist es dadurch möglich, Systemkennwerte zur verbesserten Rotorlagewinkelschätzung in einem Beobachter heranzuziehen. Drehstrommotoren können somit auch unter schwierigen Bedingungen sicher gestartet und die Laufruhe während des Hochlaufs verbessert werden.

Zur Bestimmung der Lastkennlinie wird die Trägheit des Gesamtsystems bestimmt. Unter der Trägheit wird dabei die Systemträgheit des Gesamtsystems, umfassend die Drehstrommaschine und die Last sowie optional zwischen beiden Komponenten vorhandene Übertrager, wie z.B. Getriebe, verstanden.

Die Trägheit des Gesamtsystems wird bestimmt, indem als erster Schritt für eine Vielzahl von unterschiedlichen Drehzahlen jeweils ein drehzahlabhängiger Koeffizient, der das Verhältnis eines von der Drehstrommaschine aufzubringenden Drehmoments und der Trägheit wiedergibt, bestimmt und als Zuordnungsvorschrift gespeichert wird. Die Zuordnungsvorschrift kann in Gestalt einer Tabelle oder als Kennlinie, die insbesondere den Zusammenhang zwischen dem drehzahlabhängigen Koeffizient und der Drehzahl wiedergibt, vorliegen.

Die Vielzahl an drehzahlabhängigen Koeffizienten wird zweckmäßigerweise bestimmt, indem, ausgehend von der mit einer Drehzahl drehenden Drehstrommaschine, die Drehstrommaschine vom Netz getrennt wird, bis diese zum Stillstand kommt. Der Vorgang, bei dem die mit einer Drehzahl drehende Drehstrommaschine vom Netz getrennt wird, bis diese zum Stillstand kommt, wird auch als Austrudeln bezeichnet.

Zweckmäßigerweise wird die Vielzahl an drehzahlabhängigen Koeffizienten über den gesamten Drehzahlbereich, der durch die Nenndrehzahl und der Drehzahl 0 begrenzt ist, bestimmt. Zweckmäßigerweise wird die Bestimmung der drehzahlabhängigen Koeffizienten zumindest einmal durchgeführt. Um die Ergebnisgenauigkeit der drehzahlabhängigen Koeffizienten zu erhöhen, kann der beschriebene Vorgang des Austrudelns und der Erfassung der drehzahlabhängigen Koeffizienten mehrfach wiederholt werden, wobei dann z.B. eine Mittelung der in den mehreren Durchgängen für eine jeweilige Drehzahl oder ein Drehzahlinkrement erfassten drehzahlabhängigen Koeffizienten erfolgt.

Zur Bestimmung der Trägheit des Gesamtsystems wird zweckmäßigerweise als zweiter Schritt die Drehstrommaschine mit dem Sanftstarter gestartet, wobei das während des Zeitraums einer Zündung der Thyristoren resultierende mittlere Drehmoment sowie eine Drehzahländerung bestimmt werden, und wobei aus der Drehzahländerung und der im ersten Schritt bestimmten Zuordnungsvorschrift der für die Drehzahländerung drehzahlabhängige Koeffizient ermittelt wird.

Anschließend wird dann die Trägheit des Gesamtsystems ermittelt, und zwar aus dem Koeffizienten des resultierenden mittleren Drehmoments und der Summe der Drehzahländerung und des drehzahlabhängigen Koeffizienten.

Der zweite Schritt kann optional mehrfach wiederholt werden, wobei durch Mittelung der Trägheit des Gesamtsystems das Ergebnis weiter verbessert werden kann. Nachdem das Ergebnis für die Trägheit des Gesamtsystems feststeht, kann die Lastkennlinie aus einer Umrechnung der Zuordnungsvorschrift und der nun bekannten Trägheit erfolgen. Dies kann aus dem Zusammenhang, gemäß dem ein drehzahlabhängiger Koeffizient sich aus dem Verhältnis des von der Drehstrommaschine aufzubringenden Drehmoments und der Trägheit ergibt, ermittelt werden. Dabei wird die Berechnung für die Vielzahl von vorab bestimmten drehzahlabhängigen Koeffizienten vorgenommen.

Die Bestimmung der drehzahlabhängigen Lastkennlinie kann einmalig bei der Einrichtung des Systems, das die Drehstrommaschine und die Last sowie ggf. optional dazwischenliegende Übertragerkomponenten umfasst, durchgeführt werden.

Um die Berechnungsergebnisse weiter zu verbessern oder Veränderungen im Verhalten des Gesamtsystems berücksichtigen zu können, kann alternativ vorgesehen sein, die drehzahlabhängige Lastkennlinie bei jedem Aus- und Anschalten des Systems, umfassend die Drehstrommaschine und die Last sowie ggf. optional vorhandene Übertragerkomponenten, zu bestimmen.

Es ist zweckmäßig, wenn die drehzahlabhängige Lastkennlinie und/oder die ermittelte Trägheit des Gesamtsystems verarbeitet wird oder werden, um aus einer Mehrzahl an vorab bestimmten drehzahlabhängigen Lastkennlinien und/oder Trägheiten des Gesamtsystems eine aktuelle drehzahlabhängige Lastkennlinie und/oder Trägheit des Gesamtsystems zu bestimmen. Dieses Vorgehen entspricht einer kontinuierlichen Verbesserung der bis zum gegenwärtigen Zeitpunkt gewonnenen Berechnungsergebnisse für die drehzahlabhängige Lastkennlinie und/oder die Trägheit. Hierdurch kann das Hochlaufverhalten der Drehstrommaschine ständig verbessert werden.

Weiter wird eine Steuereinrichtung für eine Drehstrommaschine der hierin beschriebenen Art vorgeschlagen, die dazu eingerichtet ist, das hierin beschriebene Verfahren durchzuführen.

Weiter wird eine Drehstrommaschine mit Sanftstarter vorgeschlagen. Diese ist zur Durchführung des hierin beschriebenen Verfahrens ausgebildet, wodurch ein verbesserter Hochlauf der Drehstrommaschine ermöglicht ist.

Die Erfindung wird nachfolgend anhand der Figuren näher erläutert:

Fig. 1 einen Schnitt durch eine beispielhafte Drehstrommaschine;

Fig. 2 eine schematische Darstellung des erfindungsgemäßen Aufbaus;

Fig. 3 eine Kennlinie, die die Drehzahl der Drehstrommaschine in Abhängigkeit der Zeit beim Austrudeln zeigt und die zur Bestimmung von drehzahlabhängigen Koeffizienten zur Schätzung der Last genutzt wird;

Fig. 4 eine Reglerkaskade mit erfindungsgemäßer Vorsteuerung; und

Fig. 5 einen Ablaufplan des erfindungsgemäßen Verfahrens;

Figur 2 zeigt den prinzipiellen gewünschten Aufbau der als permanenterregte Synchronmaschine M ausgebildeten Drehstrommaschine mit Sanftstarter SS (Z.B. Sirius-Sanftstarter) ohne Geber und mit Geber G links. Wie eingangs beschrieben, kann die Drehstrommmaschine z.B. als eine Innenpolmaschine mit einem Stator St und einem Läufer L ausgebildet sein. Der Läufer L umfasst einen magnetischen Nordpol N und Südpol S. Der Stator St umfasst Wicklungsstränge U, V, W. Der Läufer L kann z.B. drehfest (oder über ein Getriebe) mit einer nicht dargestellten Welle verbunden sein, welche von einer externen Last LD mit einem, insbesondere konstanten, Moment beaufschlagt ist.

Mit Hilfe des nachfolgend beschriebenen Verfahrens, das auf das von der Anmelderin in der WO 2018/086688 A1 vorgestellte Verfahren aufbaut und nachfolgend als geberloses Startverfahren bezeichnet wird, wird die Berechnung von Zündzeitpunkten der Thyristoren des Sanftstarters SS bewirkt.

Das geberlose Startverfahren basiert auf der Überlegung, dass bei der erstmaligen Zündung der Thyristoren die Drehstrommaschine (auch: der Motor) mit dem maximal möglichen Drehmoment beschleunigt wird. Hierdurch soll sichergestellt werden, dass der Motor nach der Erstzündung bereits eine bestimme minimale Drehzahl überschritten hat und somit die induzierten Spannungen während der Prinzip bedingten Sperrzeit der Thyristoren hinreichend genau gemessen werden können. Aus den induzierten Spannungen kann anschließend nach den bereits bekannten sog. EMK-Verfahren der elektrische Winkel des Motors ermittelt und dem Benecke-Verfahren (aus der oben genannten Dissertation) übergeben werden. Zudem kann während einer zweiphasigen Zündung die Spannung der dritten Phase direkt gemessen und bei der Auswertung berücksichtigt werden.

Da Motoren an Sanftanlaufgeräten meist passive Lasten mit linearen oder quadratischen Lastkennlinien treiben, dient das Drehmoment bei der Erstzündung nahezu vollständig zur Beschleunigung der trägen Masse. Insofern kann davon ausgegangen werden, dass die Beschleunigung bei der Erstzündung ausreichend ist und die induzierten Spannungen hinreichend genau gemessen werden können. Bei der Messung der Spannungen kann auf die im Sanftstarter ohnehin vorhandene Messsensorik zurückgegriffen werden. Das Verfahren benötigt also keine zusätzliche Hardware.

Das geberlose Startverfahren umfasst zwei Schritte.

Schritt 1: Ermittlung des optimalen Zündwinkels:

Nachdem das Verfahren zur initialen Ausrichtung der Maschine abgeschlossen ist, ist der aktuelle Winkel des Motors bekannt. Basierend auf diesem bekannten Startwinkel kann gemäß dem oben genannten Verfahren jener Zündwinkel des Sanftstarters berechnet werden, bei dem das im Motor erzeugte Drehmoment für einen gegebenen Maximalstrom maximal ist. Um bei der ersten Zündung der Thyristoren ein möglichst hohes Drehmoment zu entwickeln, wird der bei der Erstzündung zulässige Maximalstrom auf den für die Leistungshalbleiter maximal zulässigen Strom gesetzt.

Bei der Berechnung des optimalen Zündwinkels geht generell auch der Verlauf des Drehwinkels und der Drehzahl während der Zündung der Thyristoren ein, jedoch sind diese bei der Berechnung des Zündwinkels nicht bekannt. Aus diesem Grund soll der optimale Zündwinkel für die Erstzündung im Rahmen eines Inbetriebnahmeverfahrens vorab für den Antrieb ermittelt werden.

Schritt 2: Umschaltung auf EMK (Elektromotorische Kraft)-Verfahren:

Nachdem die permanenterregte Synchronmaschine durch die Erstzündung beschleunigt wurde, sind die durch die Drehung der Maschine induzierten Spannungen groß genug, um sie während der Sperrphase der Thyristoren messen zu können. Aus den gemessenen Spannungen kann anschließend, z. B. durch einen Beobachter oder durch eine einfache Arcustangensberechnung der Flusswinkel der Maschine ermittelt werden. Ebenso ist es denkbar, den Drehwinkel alleine auf Basis der anregenden Spannungen, der gemessenen Ströme und der Maschinengleichungen, also mithilfe einer Berechnungsvorschrift, zu ermitteln.

Unabhängig vom gewählten Ansatz sind in den genannten Fällen bereits zahlreiche Verfahren aus dem Gebiet der geberlosen Regelung bekannt und es kann auf diese zurückgegriffen werden. Der aus dem EMK-Verfahren ermittelte Flusswinkel wird dem Benecke-Verfahren als Istwert übergeben und hieraus der nächste optimale Zündwinkel bei Drehung der Maschine ermittelt.

Für die Prädiktion des optimalen Zündwinkels der Thyristoren erfolgt im Rahmen des erfindungsgemäßen Verfahrens eine Berücksichtigung einer vorab rechentechnisch ermittelten Lastkennlinie in Abhängigkeit einer Ist-Drehzahl der Drehstrommaschine M. Basierend auf der Ist-Drehzahl und der Lastkennlinie der mit der Drehstrommaschine M verbundenen Last LD wird dann ein Solldrehmoment bestimmt, das zur Bestimmung der Zündzeitpunkte der Thyristoren genutzt wird.

Da die genaue Lastkennlinie der Last LD nicht bekannt ist und insbesondere auch von optional zwischen der Last LD und der Drehstrommaschine M optional vorhandenen Komponenten abhängig ist, wird diese zunächst rechentechnisch bestimmt. Die Lastkennlinie beschreibt dabei für eine Drehzahl n in einem vorgegebenen Drehzahlbereich ein von der Last LD im Betrieb benötigtes Drehmoment (Moment). Aus Gründen der Einfachheit wird die Reibung der sich drehenden Komponenten (Drehstrommaschine M und Last LD) als gering angenommen. Hieraus ergibt sich ein von der Last LD benötigtes Gesamtmoment zu $M_{ges} = M_L + M_R$, wobei $M_L$ das von der Last aufgenommene Moment und $M_R$ ein reibungsabhängiges Moment ist. Das Gesamtmoment $M_{ges}$ wird mit Hilfe der nachfolgend beschriebenen Vorgehensweise geschätzt.

Zunächst wird die Drehstrommaschine M mittels des Sanftstarters SS auf Nenndrehzahl $n_{Nenn}$ beschleunigt. Anschließend wird die Verbindung des Drehstrommotors M zum diesen versorgenden Netz getrennt, wodurch die Drehstrommaschine M austrudelt. Das Austrudeln umfasst die Verringerung der Drehzahl n von der Nenndrehzahl $n_{Nenn}$ bis zum Stillstand (d.h. Drehzahl n = 0). Für die Zeitdauer des Austrudelns wird ein drehzahlabhängiger Koeffizient $\alpha_{Tr}(\omega)$ definiert:

$$\alpha_{Tr}(\omega) = \frac{M_{ges}(\omega)}{J}, \qquad (1)$$

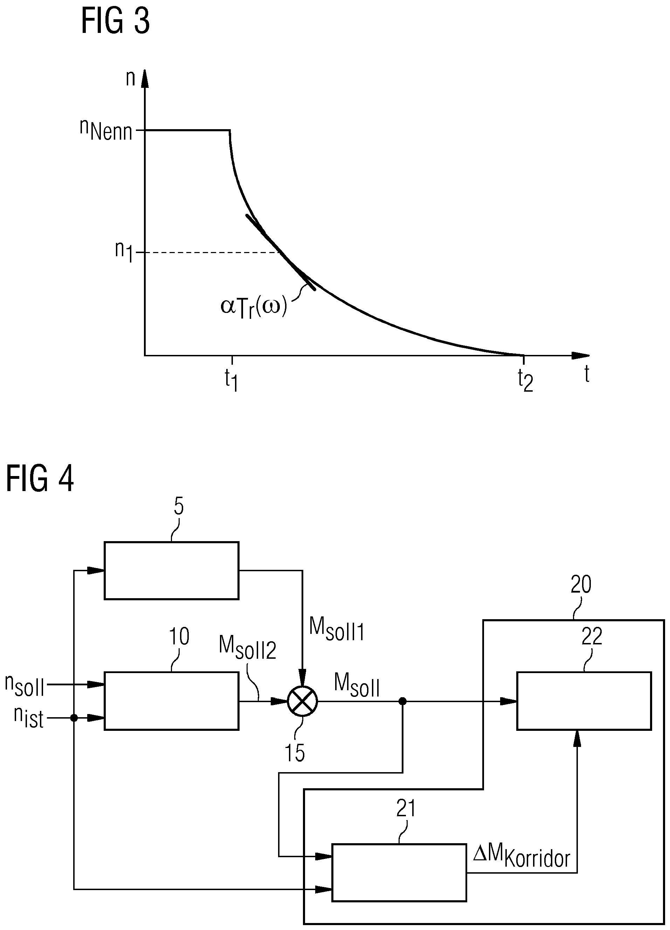

wobei $\omega$ die Drehgeschwindigkeit und J die Trägheit des Gesamtsystems sind. Der drehzahlabhängige Koeffizient $\alpha_{Tr}(\omega)$ wird dabei für eine Vielzahl von Drehzahlen über den gesamten Drehzahlbereich (0 bis $n_{Nenn}$) aufgenommen und in einem Speicher abgelegt. Es wird somit für eine Vielzahl von verschiedenen Drehzahlen jeweils ein drehzahlabhängiger Koeffizient $\alpha_{Tr}(\omega)$ bestimmt, der das Verhältnis eines von der Drehstrommaschine M aufzubringenden Drehmoments und der Trägheit J wiedergibt. Die Zuordnung zwischen Drehzahl und drehzahlabhängigen Koeffizient wird in einer Tabelle oder beispielsweise in Gestalt einer wie in Fig. 3 gezeigten Kennlinie gespeichert.

Die in Fig. 3 gezeigte Kennlinie zeigt den Verlauf der Drehzahl n der Drehstrommaschine M in Abhängigkeit der Zeit t beim Austrudeln, wobei das Austrudeln zum Zeitpunkt $t_1$ beginnt, zu dem die Drehstrommaschine M die Nenndrehzahl $n_{Nenn}$ aufweist. Zum Zeitpunkt $t_2$ ist das Austrudeln beendet, d.h. die Drehzahl n hat den Wert 0 erreicht. Für jede Drehzahl kann eine Steigung ermittelt werden, welche den drehzahlabhängigen Koeffizienten $\alpha_{Tr}(\omega)$ repräsentiert. Der Übersichtlichkeit halber ist in Fig. 3 lediglich für eine Drehzahl $n_1$ ($n_{Nenn} > n_1 > 0$) der zugeordnete drehzahlabhängige Koeffizient $\alpha_{Tr}(\omega)$ dargestellt.

Die drehzahlabhängigen Koeffizienten $\alpha_{Tr}(\omega)$ können beispielsweise dadurch ermittelt werden, dass für diskrete Zeitschritte zwischen $t_1$ und $t_2$ jeweilige, aufeinander folgende Drehzahlunterschiede ermittelt werden, wobei sich dann aus dem Quotienten der Drehzahldifferenz und der Zeitdifferenz der gesuchte drehzahlabhängige Koeffizient ergibt. Dieser wird dann beispielsweise einem Mittelwert der die Drehzahldifferenz begrenzenden Drehzahlen zugewiesen.

Um die drehzahlabhängigen Koeffizienten $\alpha_{Tr}(\omega)$ möglichst genau zu bestimmen bzw. für eine möglichst große Anzahl an unterschiedlichen Drehzahlen verfügbar zu haben, kann der oben beschriebene Vorgang des Austrudelns und der Bestimmung der drehzahlabhängigen Koeffizienten mehrfach wiederholt werden. Beispielsweise kann dann für bestimmte Drehzahlbereiche eine Mittelung der Ergebnisse stattfinden, um die Ergebnisgenauigkeit zu erhöhen. Die Ergebnisse werden zur weiteren Verwendung in einem Speicher abgelegt.

In der Folge erfolgt ein weiterer Start der Drehstrommaschine M mittels des oben beschriebenen Verfahrens. Durch dieses erhält man das mittlere Drehmoment $M_{mittel}(\Delta t)$ während einer Zündung der Thyristoren. Über den Zeit-

bereich $\Delta t$ dieser Zündung wird dann eine Drehzahländerung $\alpha(\Delta t)$ bestimmt. Die Drehzahländerung kann aus mindestens zwei ermittelten Drehzahlen, die aus der EMK bestimmt werden können, ermittelt werden. Bevorzugt wird die Drehzahländerung durch eine Mittelung über mehrere ermittelte Drehzahlpunkte bestimmt, um Messrauschen ausblenden zu können. Hieraus ergibt sich folgender Zusammenhang:

$$M_{mittel} - M_{ges} = J\alpha(\Delta t) \qquad (2)$$

In dieser Gleichung repräsentieren $M_{mittel}$ das durch den Start der Drehstrommaschine M eingespeiste Drehmoment und $M_{ges}$ das Gesamtmoment (Summe der wirkenden Drehmomente, abgesehen vom antreibenden Drehmoment $M_{mittel}$). Gleichung (2) kann wie folgt umgeformt werden:

$$\alpha(\Delta t) = \frac{M_{mittel}(\Delta t)}{J} - \frac{M_{ges}}{J} = \frac{M_{mittel}(\Delta t)}{J} - \alpha_{Tr}(\omega) \qquad (3)$$

Der Koeffizient $\alpha_{Tr}(\omega)$ kann mittels der mittleren Drehzahl über den Zeitabschnitt $\Delta t$ aus der zuvor im Speicher abgelegten Kennlinie $\alpha_{Tr}(\omega)$ ausgelesen werden. Umgestellt nach der Trägheit J ergibt sich dann die gesuchte Trägheit J des Systems, bestehend aus der Drehstrommaschine M und der mit dieser gekoppelten Last LD (optional unter Berücksichtigung aller zwischen geschalteten Komponenten, wie z.B. einem Getriebe) :

$$J = \frac{M_{mittel}(\Delta t)}{\alpha(\Delta t) + \alpha_{Tr}(\omega)} \qquad (4)$$

Die Bestimmung der Trägheit J kann optional mehrfach wiederholt werden. Durch eine Mittelung kann die aus vielen Wiederholungen bestimmte Trägheit J präziser bestimmt werden. Theoretisch sollte der Einfluss der Trägheit J des Gesamtsystems bei jeder neuen Bestimmung zum gleichen Wert führen.

Die Kenntnis der Trägheit J ermöglicht es nun, mit Hilfe von Gleichung (1) die drehzahlabhängigen Koeffizienten $\alpha_{Tr}(\omega)$ in die Summe der Lastmomente $M_{ges}$ umzurechnen. Entsprechend liegen nach Durchführung dieses Schrittes eine detaillierte drehzahlabhängige Lastkennlinie, ebenso wie die diese beeinflussende Trägheit J vor. Die drehzahlabhängige Lastkennlinie kann nun zur Verbesserung des Hochlaufverhaltens der Drehstrommaschine M verwendet werden, wobei dies z.B. im Rahmen einer Vorsteuerung erfolgt.

Die Verbesserung des Hochlaufverhaltens ermöglicht eine gezieltere Zündung der Thyristoren. Dies wirkt sich in einer besseren Drehmomentausbeute aus. Zusätzlich können Drehmomentüberschüsse durch die bessere Lastkennlinie reduziert werden. Dies führt zu einer größeren Laufruhe während des Hochlaufens der Drehstrommaschine. Die Systemkennwerte können darüber hinaus zu einer verbesserten Rotorlagewinkelschätzung herangezogen werden.

Das soeben beschriebene Verfahren zur Ermittlung der drehzahlabhängigen Lastkennlinie kann einmalig im Einrichtbetrieb des Sanftstarters bzw. der Drehstrommaschine durchgeführt werden. Die Bestimmung der drehzahlabhängigen Lastkennlinie kann darüber hinaus auch kontinuierlich bei jedem Austrudeln und erneutem Hochlauf der Drehstrommaschine neu ermittelt werden. Dadurch kann die Genauigkeit der im Rahmen der Vorsteuerung verwendeten drehzahlabhängigen Lastkennlinie verbessert werden. Dadurch kann das Hochlaufverhalten kontinuierlich verbessert werden.

Fig. 4 zeigt eine im Rahmen des erfindungsgemäßen Verfahrens beispielhaft zum Einsatz kommende Reglerkaskade zur Drehzahlregelung der permanenterregten Drehstrommaschine unter Verwendung der wie oben beschriebenen ermittelten Lastkennlinie der Last LD. Diese umfasst eine Vorsteuerung 5, einen Drehzahlregler 10 und eine Zündzeitpunktberechnungs-Einheit 20.

Die Vorsteuerung 5 bestimmt anhand der wie oben beschrieben ermittelten Lastkennlinie der mit der Drehstrommaschine M verbunden Last und einer Ist-Drehzahl $n_{Ist}$ als Eingangsgröße ein erstes Solldrehmoment $M_{soll1}$. Das von der Vorsteuerung 5 ermittelte erste Solldrehmoment $M_{soll1}$ ist drehzahlabhängig. Die Ermittlung der drehzahlabhängigen Lastkennlinie kann durch eine weitere, nicht dargestellte Recheneinheit vorgenommen worden sein, wobei die ermittelte Lastkennlinie dann der Vorsteuerung 5 zur weiteren Verarbeitung zur Verfügung gestellt wird.

Der Drehzahlregler 10 ist dazu eingerichtet, aus einer Solldrehzahl $n_{Soll}$ und der Ist-Drehzahl $n_{Ist}$ ein zweites Solldrehmoment $M_{Soll2}$ für die Drehstrommaschine M zu ermitteln. Die Ist-Drehzahl $n_{Ist}$ kann mittels eines Sensors gemessen sein. Die Ist-Drehzahl $n_{Ist}$ kann auch aus der EMK berechnet sein.

Das erste und das zweite Solldrehmoment $M_{soll1}$, $M_{soll2}$ werden durch den Addierer 15 zu einem gesamten Solldrehmoment $M_{soll}$ (allgemein: Solldrehmoment) addiert.

Die Zündzeitpunktberechnungs-Einheit 20 umfasst eine Bestimmungseinheit 22, die, wie vorstehend beschrieben, dazu eingerichtet ist, die Berechnung der Zündzeitpunkte durchzuführen, um das ihr zugeführte Solldrehmoment $M_{Soll}$ möglichst gut zu erreichen. Die Bestimmungseinheit 22 ist somit dazu eingerichtet, das geberlose Startverfahren auszuführen und alle möglichen Zündzeitpunkte für die Zündung der Thyristoren des Sanftstarters SS auszugeben.

Die Zündzeitpunktberechnungs-Einheit 20 umfasst darüber hinaus eine Adaptionseinheit 21, die dazu eingerichtet ist, einen Drehmomentkorridor $\Delta M_{Korridor}$ anhand einer vorgegebenen Berechnungsvorschrift, der die Ist-Drehzahl $n_{Ist}$ und das Sollmoment $M_{Soll}$ zugeführt werden, zu bestimmen. Der Drehmomentkorridor wird der Bestimmungseinheit 22 der Zündzeitpunktberechnungs-Einheit 20 zur Bestimmung der Zündzeitpunkte der Thyristoren des Sanftstarters zugeführt.

Die Bestimmungseinheit 22 berechnet alle möglichen Zündzeitpunkte der Thyristoren des Sanftstarters (SS) und bestimmt ein zu jedem Zündzeitpunkt zugeordnetes Drehmoment, das aus der Zündung der Thyristoren zu einem jeweiligen Zündzeitpunkt resultiert. Anschließend bestimmt die Bestimmungseinheit 22, welches der bestimmten Drehmomente in dem Drehmomentkorridor liegt und ermittelt den zugeordneten Zündzeitpunkt der Thyristoren. Dann gibt die Bestimmungseinheit 22 ein entsprechendes Signal zum Zünden der Thyristoren zu dem zugeordneten Zündzeitpunkt.

Wenn für alle möglichen Zündzeitpunkte kein zugeordnetes Drehmoment in dem Drehmomentkorridor $\Delta M_{Korridor}$ zum Liegen kommt, wird kein Signal zum Zünden der Thyristoren ausgegeben. Wenn demgegenüber in dem Drehmomentkorridor $\Delta M_{Korridor}$ mehrere der bestimmten Drehmomente liegen, wird der dem Drehmoment zugeordnete Zündzeitpunkt ausgewählt, dessen zugeordnetes Drehmoment dem Solldrehmoment $M_{Soll}$ am nächsten kommt.

Die von der Adaptionseinheit 21 verarbeitete Berechnungsvorschrift kann auf einer oder mehreren vorab definierten Kennlinien basieren, welche den Drehmomentkorridor definieren bzw. begrenzen. Die von der Adaptionseinheit 21 verarbeitete Berechnungsvorschrift bzw. der dadurch definierte Korridor umfasst eine obere und eine untere Grenze. Die die obere Grenze ist durch einen prozentualen Aufschlag auf das Solldrehmoment $M_{Soll}$ definiert. Die untere Grenze ist durch einen prozentualen Abschlag auf das Solldrehmoment $M_{Soll}$ definiert. Der Korridor weist dadurch, abhängig von der Höhe des ermittelten bzw. geforderten Solldrehmoments $M_{Soll}$ eine unterschiedliche Breite auf, wobei diese mit zunehmender Höhe des Solldrehmoments größer wird.

Alternativ oder zusätzlich kann vorgesehen sein, dass die Berechnungsvorschrift eine obere und eine untere Grenze umfasst, wobei die obere Grenze durch einen absoluten Aufschlag auf das Solldrehmoment $M_{Soll}$ definiert ist. Die untere Grenze ist durch einen absoluten Abschlag auf das Solldrehmoment $M_{Soll}$ definiert. Der Korridor weist dadurch, unabhängig von der Höhe des ermittelten bzw. geforderten Solldrehmoments eine gleiche Breite bzw., in Verbindung mit dem prozentualen Aufschlag, eine gleichmäßige Verbreiterung auf. Dies erhöht die Wahrscheinlichkeit, dass geeignete Zündzeitpunkte zum Zünden der Thyristoren des Sanftstarters gefunden werden.

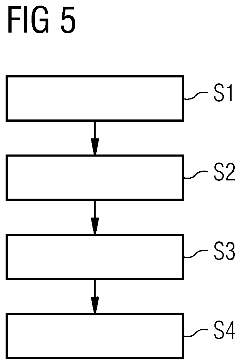

Fig. 5 zeigt einen Ablaufplan des erfindungsgemäßen Verfahrens. In Schritt S1 erfolgt eine, insbesondere einmalige, Bestimmung einer drehzahlabhängigen Lastkennlinie einer mit der Drehstrommaschine M gekoppelten Last. Die Lastkennlinie beschreibt für eine Drehzahl in einem vorgegebenen Drehzahlbereich ein von der Last im Betrieb benötigtes Moment. In einem Schritt S2 erfolgt die Bestimmung einer Soll-Drehmoments aus der Lastkennlinie in Abhängigkeit einer Ist-Drehzahl der Drehmomentmaschine. In Schritt S3 erfolgt die Verarbeitung des Soll-Drehmoments zur Bestimmung eines Zündzeitpunkts der Thyristoren. In Schritt S4 erfolgt das Zünden der Thyristoren zu dem zugeordneten Zündzeitpunkt.

Das beschriebene Verfahren basiert alleine auf den in einem Seriengerät bereits vorhandenen Messwerten und benötigt keine zusätzliche Sensorik. Es ist somit möglich, ein bestehendes Produkt alleine durch eine Softwarelösung für den Betrieb eines IE4-Motors zu erweitern.

**Patentansprüche**

1. Verfahren zur Drehzahlregelung einer permanenterregten Drehstrommaschine (M) mit einem Thyristoren umfassenden Sanftstarter (SS), insbesondere mittels einer Reglerkaskade, umfassend die Schritte:

   - Bestimmung einer drehzahlabhängigen Lastkennlinie einer mit der Drehstrommaschine (M) gekoppelten Last, wobei die Lastkennlinie für eine Drehzahl (n) in einem vorgegebenen Drehzahlbereich ein von der Last (LD) im Betrieb benötigtes Moment ($M_L$) beschreibt;
   - Bestimmung eines Solldrehmoments aus der Lastkennlinie in Abhängigkeit einer Ist-Drehzahl der Drehstrommaschine (M);
   - Verarbeitung des Solldrehmoments zur Bestimmung eines Zündzeitpunkts der Thyristoren;
   - Zünden der Thyristoren zu dem zugeordneten Zündzeitpunkt.

2. Verfahren nach Anspruch 1, **dadurch gekennzeichnet, dass** zur Bestimmung der Lastkennlinie die Trägheit (J) des Gesamtsystems bestimmt wird.

3. Verfahren nach Anspruch 2, **dadurch gekennzeichnet, dass** die Trägheit (J) des Gesamtsystems bestimmt wird, indem als erster Schritt für eine Vielzahl von verschiedenen Drehzahlen ($\omega$) jeweils ein drehzahlabhängiger Koeffizient ($\alpha_{Tr}(\omega)$), der das Verhältnis eines von der Drehstrommaschine (M) aufzubringenden Drehmoments ($M_{ges}$) und der Trägheit (J) wiedergibt, bestimmt und als Zuordnungsvorschrift gespeichert wird.

4. Verfahren nach Anspruch 3, **dadurch gekennzeichnet, dass** die Vielzahl an drehzahlabhängigen Koeffizienten ($\alpha_{Tr}(\omega)$) bestimmt wird, indem, ausgehend von der mit einer Nenndrehzahl drehenden Drehstrommaschine, die Drehstrommaschine (M) vom Netz getrennt wird bis diese zum Stillstand kommt.

5. Verfahren nach Anspruch 3 oder 4, **dadurch gekennzeichnet, dass** die Vielzahl an drehzahlabhängigen Koeffizienten ($\alpha_{Tr}(\omega)$) über den gesamten Drehzahlbereich, der durch die Nenndrehzahl und der Drehzahl 0 begrenzt ist, bestimmt wird.

6. Verfahren nach Anspruch 5, **dadurch gekennzeichnet, dass** die Bestimmung der drehzahlabhängigen Koeffizienten ($\alpha_{Tr}(\omega)$) zumindest einmal durchgeführt wird.

7. Verfahren nach einem der Ansprüche 2 bis 5, **dadurch gekennzeichnet, dass** zur Bestimmung der Trägheit (J) des Gesamtsystems als zweiter Schritt die Drehstrommaschine (M) mit dem Sanftstarter (SS) gestartet wird und das während des Zeitraums ($\Delta t$) einer Zündung der Thyristoren resultierende mittlere Drehmoment ($M_{mittel}(\Delta t)$) sowie eine Drehzahländerung ($\alpha(\omega)$) bestimmt werden, wobei aus der Drehzahländerung ($\alpha(\omega)$) und der im ersten Schritt bestimmten Zuordnungsvorschrift der für die Drehzahländerung drehzahlabhängige Koeffizient ($\alpha_{Tr}(\omega)$) ermittelt wird.

8. Verfahren nach Anspruch 7, **dadurch gekennzeichnet, dass** die Trägheit (J) des Gesamtsystems ermittelt wird aus dem Quotienten des resultierenden mittleren Drehmoments ($M_{mit\text{-}tel}(\Delta t)$) und der Summe der Drehzahländerung ($\alpha(\omega)$) und des drehzahlabhängigen Koeffizienten ($\alpha_{Tr}(\omega)$).

9. Verfahren nach Anspruch 8, **dadurch gekennzeichnet, dass** die Lastkennlinie aus einer Umrechnung der Zuordnungsvorschrift und der Trägheit (J) erfolgt.

10. Verfahren nach einem der Ansprüche 1 bis 9, **dadurch gekennzeichnet, dass** die Bestimmung der drehzahlabhängigen Lastkennlinie einmalig bei der Einrichtung des Systems, umfassend die Drehstrommaschine (M) und die Last (LD), durchgeführt werden.

11. Verfahren nach einem der Ansprüche 1 bis 9, **dadurch gekennzeichnet, dass** die Bestimmung der drehzahlabhängigen Lastkennlinie bei jedem Aus- und Anschalten des Systems, umfassend die Drehstrommaschine (M) und die Last (LD), durchgeführt werden.

12. Verfahren nach Anspruch 11, **dadurch gekennzeichnet, dass** die drehzahlabhängige Lastkennlinie und/oder die ermittelte Trägheit (J) des Gesamtsystems verarbeitet wird oder werden, um aus einer Mehrzahl an vorab bestimmten drehzahlabhängigen Lastkennlinien und/oder Trägheiten (J) des Gesamtsystems eine aktuelle drehzahlabhängige Lastkennlinie und/oder Trägheit (J) des Gesamtsystems zu bestimmen.

13. Steuereinrichtung für eine Drehstrommaschine (M) mit einem Thyristoren umfassenden Sanftstarter (SS), **dadurch gekennzeichnet, dass** diese dazu eingerichtet ist, das Verfahren gemäß einem der Ansprüche 1 bis 12 durchzuführen.

14. Drehstrommaschine mit Sanftstarter, **dadurch gekennzeichnet, dass** diese eine Steuereinrichtung umfasst, die dazu ausgebildet ist, das Verfahren nach einem der Patentansprüche 1 bis 12 zu deren Steuerung durchzuführen.

## FIG 1

St  L

S

N

M

U
V
W

## FIG 2

SS

SIRIUS
Sanftstarter

M

G

Geber

SS

SIRIUS
Sanftstarter

M
M

LD

FIG 3

FIG 4

# FIG 5

**EP 3 723 274 A1**

Europäisches Patentamt
European Patent Office
Office européen des brevets

# EUROPÄISCHER RECHERCHENBERICHT

Nummer der Anmeldung

EP 19 16 7794

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | Marcel Benecke: "Anlauf von energieeffizienten Synchronmaschinen mit Drehstromsteller", , 6. September 2012 (2012-09-06), XP055392434, Gefunden im Internet: URL:http://d-nb.info/1054135258/34 [gefunden am 2017-07-20] | 1,13,14 | INV. H02P23/14 H02P23/00 H02P1/16 H02P6/182 H02P27/16 H02P21/14 H02P21/20 |
| Y | * das ganze Dokument * ----- | 2-6, 10-12 | |
| Y | WO 2015/184047 A1 (EATON CORP [US]) 3. Dezember 2015 (2015-12-03) * das ganze Dokument * ----- | 2-6, 10-12 | |
| A | Peter Brosch: "Praxis der Drehstromantriebe" In: "Praxis der Drehstromantriebe", 1. Juli 2002 (2002-07-01), Vogel Buchverlag, XP055613602, ISBN: 978-3-8023-1748-4 Seiten 101-132, * das ganze Dokument * ----- | 1-14 | RECHERCHIERTE SACHGEBIETE (IPC) H02P |
| A | EP 1 939 704 A2 (BOSCH GMBH ROBERT [DE]) 2. Juli 2008 (2008-07-02) * das ganze Dokument * ----- | 1-14 | |

Der vorliegende Recherchenbericht wurde für alle Patentansprüche erstellt

| Recherchenort | Abschlußdatum der Recherche | Prüfer |
|---|---|---|
| München | 20. August 2019 | Wimböck, Thomas |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

&  : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 19 16 7794

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

20-08-2019

| Im Recherchenbericht angeführtes Patentdokument | Datum der Veröffentlichung | Mitglied(er) der Patentfamilie | Datum der Veröffentlichung |
|---|---|---|---|
| WO 2015184047 A1 | 03-12-2015 | CN 106416049 A<br>EP 3149845 A1<br>US 2015349673 A1<br>WO 2015184047 A1 | 15-02-2017<br>05-04-2017<br>03-12-2015<br>03-12-2015 |
| EP 1939704 A2 | 02-07-2008 | DE 102006062591 A1<br>EP 1939704 A2 | 03-07-2008<br>02-07-2008 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2018086688 A1